# EUROPÄISCHE PATENTSCHRIFT

(11) **EP 4 003 816 B1**
(45) Veröffentlichungstag und Bekanntmachung des Hinweises auf die Patenterteilung: **16.10.2024**
(21) Anmeldenummer: 20732197.7
(22) Anmeldetag: 10.06.2020
(51) Int. Cl.: B62D 25/08, B60K 7/00, B62D 25/02, B60K 1/04, B62D 25/20, B62D 27/02

(54) **KAROSSERIESTRUKTUR FÜR EIN ELEKTRISCH BETRIEBENES FAHRZEUG**
BODY STRUCTURE FOR AN ELECTRICALLY OPERATED VEHICLE
STRUCTURE DE CARROSSERIE POUR UN VÉHICULE À FONCTIONNEMENT ÉLECTRIQUE

(30) Priorität: 25.07.2019 DE 102019211108
(43) Veröffentlichungstag der Anmeldung: 01.06.2022
(73) Patentinhaber: VOLKSWAGEN AKTIENGESELLSCHAFT, 38440 Wolfsburg (DE)
(72) Erfinder: SCHILLING, Thomas, 38524 Sassenburg (DE); WALLMANN, Nicole, 29379 Knesebeck (DE); LÜKEN, Ingo, 38479 Tappenbeck (DE); KRAUTH, Werner, 38442 Wolfsburg (DE)
(86) Internationale Anmeldenummer: PCT/EP2020/066020
(87) Internationale Veröffentlichungsnummer: WO 2021/013429

(56) Entgegenhaltungen:
- DE-A1- 102010 023 075
- JP-A- 2006 035 934
- JP-U- H0 244 578
- US-A1- 2010 072 786
- US-A1- 2013 088 044

## Beschreibung

Die Erfindung betrifft eine Karosseriestruktur für ein elektrisch betriebenes Fahrzeug nach dem Oberbegriff des Anspruches 1.

Bei einem elektrisch betriebenen zweispurigen Fahrzeug kann eine rechtwinklige Traktionsbatterie von fahrzeugunten in einen bodenseitig offenen Montageraum eingesetzt werden. Der Batterie-Montageraum kann in der Fahrzeuglängsrichtung von vorderen und hinteren Batteriequerträgern begrenzt sein und in der Fahrzeugquerrichtung durch seitliche Schweller begrenzt sein, die die vorderen/hintere Batteriequerträger miteinander verbinden. Die Traktionsbatterie kann an ihrem Batteriegehäuse einen umlaufenden Gehäuseflansch aufweisen. Bei in den karosserieseitigen Montageraum eingesetzter Traktionsbatterie ist der Batterie-Gehäuseflansch an die Unterseite der Schweller und an die Unterseite der vorderen/hinteren Batteriequerträger verschraubt.

In einer Karosseriestruktur ist an jeder Fahrzeugseite im Hinterwagenbereich ein hinterer Karosserie-Längsträger angeordnet, der in der Fahrzeuglängsrichtung nach fahrzeugvorne in den jeweiligen Schweller übergeht. Die jeweils hintere Batterieecke der Traktionsbatterie ist von einem rechtwinkligen Inneneckbereich eingefasst, der zwischen dem Schweller und dem hinteren Batteriequerträger aufgespannt ist.

Im Hinblick auf eine im Heckcrashfall bauteilsteife Karosseriestruktur können im Stand der Technik der hintere Karosserie-Längsträger und der nach fahrzeugvorne anschließende Schweller in Längsflucht verlaufen. Auf diese Weise ergibt sich im Heckcrashfall eine crashgünstige Kraftübertragung vom Fahrzeugheck zur crashabgewandten Fahrzeugfront, und zwar unter weitgehender kräftemäßiger Entlastung der crashsensiblen Traktionsbatterie. Allerdings ist in diesem Fall die Traktionsbatterie in der Fahrzeugquerrichtung vergleichsweise schmal mit entsprechend reduzierter Batteriekapazität bemessen.

Aus der US 2013/088044 A1 ist eine gattungsgemäße Karosseriestruktur für ein elektrisch betriebenes Fahrzeug bekannt. Aus der JP H02 44578 U 27 ist eine Karosseriestruktur bekannt, in der zwischen dem Schweller und einem Hinterrahmen ein Eckknoten angeordnet ist. Aus der US 2010/072786 A1 ist ein elektrisch betriebenes Fahrzeug bekannt. Das Fahrzeug weist einen Montageraum auf, in dem die Traktionsbatterie angeordnet ist. Der Montageraum ist zwischen U-förmigen Hinterrahmenteilen, Eckknotenteilen und den U-förmigen Querträgern begrenzt. Aus der JP 2006 035934 A ist eine Bodenplatte bekannt, die U-förmige Hinterrahmenprofile abdeckt. Aus der DE 10 2013 015 531 A1 ist ein Kraftfahrzeugkarosserie-Rohbau sowie ein Herstellungsverfahren für einen solchen Rohbau bekannt. Aus der DE 10 2011 100 624 A1 ist ein Fahrzeug mit eingebauter Traktionsbatterie bekannt.

Die Aufgabe der Erfindung besteht darin, eine Karosseriestruktur für ein elektrisch betriebenes Fahrzeug bereitzustellen, bei dem einerseits im Heckcrashfall eine Crashsicherheit bereitgestellt ist und andererseits im Vergleich zum Stand der Technik die Batteriekapazität der crashsensiblen Traktionsbatterie erhöht ist.

Die Aufgabe ist durch die Merkmale des Anspruches 1 gelöst. Bevorzugte Weiterbildungen der Erfindung sind in den Unteransprüchen offenbart.

Erfindungsgemäß sind der Schweller in der daran anschließende hintere Karosserie-Längsträger zueinander nicht mehr in Längsflucht ausgerichtet. Vielmehr ist erfindungsgemäß der Schweller mit Bezug auf den hinteren Karosserie-Längsträger in der Fahrzeugquerrichtung um einen Querversatz nach fahrzeugaußen versetzt. Auf diese Weise ergibt sich in der Fahrzeugquerrichtung im Vergleich zum Stand der Technik ein Bauraumgewinn für die Traktionsbatterie. Die Traktionsbatterie kann daher wesentlich breiter bemessen werden, wodurch deren Batteriekapazität erhöht wird. Um in einem Heckcrashfall eine Crashsicherheit bereitzustellen, schließt sich an den hinteren Karosserie-Längsträger in der Fahrzeuglängsrichtung nach fahrzeugvorne ein hinterer Eckknoten an. Der hintere Eckknoten ist nach fahrzeugvorne unter Aufbrauch des Querversatzes aufgeweitet und kraftübertragend (an einer Schweller-Anbindungsstelle) am Schweller angebunden. Auf diese Weise kann im Heckcrashfall unter kräftemäßiger Entlastung der Traktionsbatterie die Heckcrashkraft in Richtung Fahrzeugfront übertragen werden.

Erfindungsgemäß ist der hintere Karosserie-Längsträger ein im Querschnitt U-förmiges Profilteil mit einem Längsträger-Boden sowie davon hochgezogenen Innen- und Außenflanken. Das nach oben offene U-Profil des Karosserie-Längsträgers ist im Zusammenbauzustand von einem fondseitigen Bodenblechteil geschlossen. Die Außenflanke des hinteren Längsträgers begrenzt einen Radraum des heckseitigen Radhauses in der Fahrzeugquerrichtung nach fahrzeuginnen. Von besonderer Bedeutung ist eine bauteilsteife Schweller-Anbindungsstelle an dem hinteren Karosserie-Längsträger. Vor diesem Hintergrund kann die Außenflanke des hinteren Karosserie-Längsträgers nach fahrzeugvorne an einer Übergangskante mit einem in der Fahrzeugquerrichtung nach fahrzeugaußen abragenden Schweller-Abschlussteil verlängert sein. Am Schweller-Abschlussteil schließt der Schweller kraftübertragend ab (zum Beispiel durch Schweißverbindung). Das Schweller-Abschlussteil begrenzt zudem den Radraum des heckseitigen Radhauses in der Fahrzeug-Längsrichtung nach fahrzeugvorne.

Zur weiteren Erhöhung der Bauteilsteifigkeit der Schweller-Anbindungsstelle kann der Längsträger-Boden des heckseitigen Karosserie-Längsträgers nach fahrzeugvorne mit einem Fügeabschnitt verlängert sein, der den Schweller untergreift und mit diesem kraftübertragend (zum Beispiel Schweißverbindung) verbunden ist.

Im hinteren Längsträger-Eckknoten kann zudem der hintere Karosserie-Längsträger kraftübertragend am hinteren Batterie-Querträger angebunden sein. In einer technischen Realisierung kann hierzu der Längsträger-Boden des hinteren Karosserie-Längsträgers nach fahrzeugvorne mit einem Bodensegment verlängert sein. Das Bodensegment kann den hinteren Batterie-Querträger untergreifen und mit diesem kraftübertragend verbunden sein (zum Beispiel durch Schweißung).

Bevorzugt kann der hintere Batterie-Querträger ein U-förmiges Profilteil mit einem Querträger-Boden sowie mit davon hochgezogenen Vorder- und Hinterflanken sein. Das nach oben offene Profil des hinteren Batterie-Querträgers kann im Zusammenbauzustand von einem fondseitigen Bodenblechteil geschlossen sein.

Im Hinblick auf eine einwandfreie Kraftübertragung in einem Seitencrashfall ist es bevorzugt, wenn die Vorderflanke des hinteren Batterie-Querträgers in der Fahrzeugquerrichtung bis in kraftübertragender Anlage (das heißt in Schweißverbindung) mit dem Schweller geführt ist. Die Vorderflanke des Batterie-Querträgers begrenzt den Batterie-Montageraum und spannt zusammen mit dem Schweller den Inneneckbereich des Batterie-Montageraums auf. Für eine bauteilsteife Anbindung kann das Bodensegment des hinteren Karosserie-Längsträgers und der Querträger-Boden des hinteren Batterie-Querträgers unter Bildung einer bauteilsteifen Doppelwandstruktur miteinander verbunden sein (zum Beispiel durch Schweißung).

In einem Heckcrashfall ergibt sich ein Schweller-Lastpfad, in dem die Außenflanke sowie der Längsträger-Boden des hinteren Karosserie-Längsträgers eingebunden ist. Zur Aussteifung des Schweller-Lastpfads kann ein Schweller-Schottblechteil bereitgestellt sein. Das Schweller-Schottblechteil kann die Außenflanke des hinteren Karosserie-Längsträgers im Bereich der Übergangskante zum Schweller-Abschlussteil nach fahrzeugvorne verlängern. Hierzu kann in der Hinterflanke des hinteren Batterie-Querträgers ein Montagefreischnitt ausgebildet sein, durch den sich das Schweller-Schottblechteil bis in kraftübertragende Anlage mit der Vorderflanke des hinteren Batterie-Querträgers erstreckt.

Zudem kann sich im Heckcrashfall ein Batterie-Lastpfad bilden (parallel zum Schweller-Lastpfad). In dem Batterie-Lastpfad kann die Innenflanke sowie der Längsträger-Boden des hinteren Karosserie-Längsträgers sowie die Vorderflanke des Batterie-Querträgers eingebunden sein. Zur Aussteifung des Batterie-Lastpfads kann die Innenflanke des hinteren Karosserie-Längsträgers mit einem Batterie-Schottblechteil verlängert sein. Das Batterie-Schottblechteil kann (analog zum Schweller-Schottblechteil) durch den Montagefreischnitt der Hinterflanke des hinteren Batterie-Querträgers bis in kraftübertragende Anlage mit der Vorderflanke des Batterie-Querträgers geführt sein.

Nachfolgend ist ein Ausführungsbeispiel der Erfindung anhand der beigefügten Figuren beschrieben.

Es zeigen:
- Fig. 1: in einer perspektivischen Teilansicht eine Karosseriestruktur eines zweispurigen Kraftfahrzeugs;
- Fig. 2: in einer perspektivischen Darstellung eine Traktionsbatterie in Alleinstellung;
- Fig. 3: ein Unterbau der Karosseriestruktur mit demontierter Traktionsbatterie;
- Fig. 4: in einer perspektivischen Teilschnittdarstellung einen Hinterwagenbereich des Unterbaus der Karosseriestruktur; und
- Fig. 5 bis 7: jeweils unterschiedliche Ansichten des heckseitigen Eckknotens.

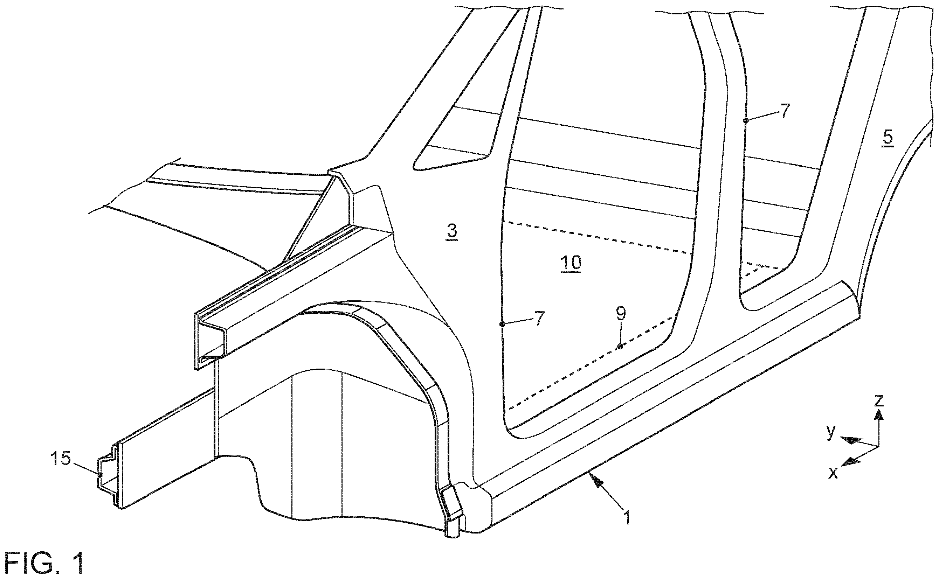

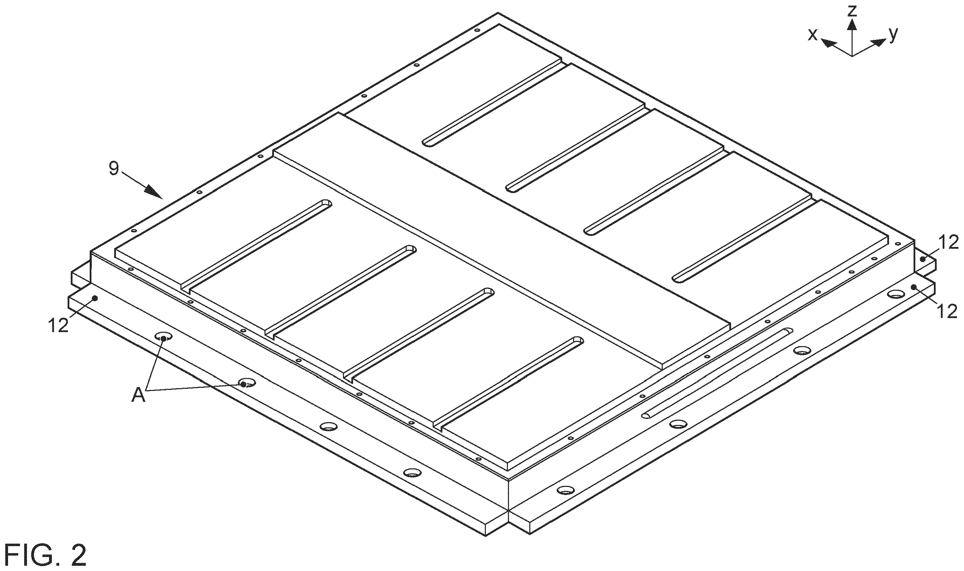

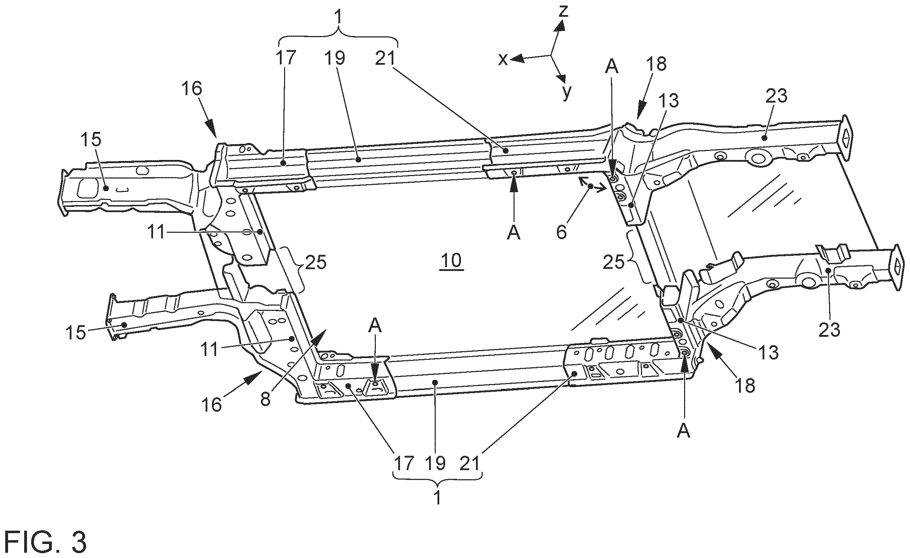

In der Fig. 1 ist eine Karosseriestruktur eines zweispurigen Fahrzeugs gezeigt, die nachfolgend insoweit beschrieben ist, als es für das Verständnis der Erfindung erforderlich ist. Demzufolge weist die Karosseriestruktur zwei seitliche, in der Fahrzeuglängsrichtung x verlaufende Schweller 1 auf, von denen in der Fig. 1 lediglich einer gezeigt ist. Der Schweller 1 erstreckt sich in der Fahrzeuglängsrichtung x zwischen einer vorderen A-Säule 3 sowie einer hinteren C-Säule 5 und begrenzt bodenseitig Seitentüröffnungen 7. Im Fahrzeugboden der Karosseriestruktur ist eine crashsensible Traktionsbatterie 9 (Fig. 2) verbaut. Diese ist unterhalb eines Bodenblechteils 10 (Fig. 3) in einem Montageraum 8 (Fig. 3) positioniert. Der Montageraum 8 erstreckt sich in der Fahrzeugquerrichtung y zwischen den beiden Schwellern 1. In der Fahrzeuglängsrichtung x erstreckt sich der Montageraum 8 zwischen einem vorderen Batteriequerträger 11 und einem hinteren Batteriequerträger 13. In der Fig. 2 weist die Traktionsbatterie 9 einen umlaufenden Gehäuseflansch 12 auf, der über Schraubpunkte A an die Unterseite der Schweller 1 sowie der Batteriequerträger 11, 13 verschraubbar ist.

Wie aus der Fig. 3 hervorgeht, verläuft im Vorderwagenbereich der Karosseriestruktur an jeder Fahrzeugseite ein vorderer Karosserie-Längsträger 15, der in der Fahrzeuglängsrichtung x nach fahrzeughinten unter Zwischenschaltung eines Hohlprofil-Eckknotens 16 in den jeweiligen Schweller 1 übergeht. Im weiteren Verlauf nach fahrzeughinten schließt an jedem Schweller 1 ein hinterer Eckknoten 18 an, der in einen hinteren Karosserie-Längsträger 23 übergeht.

In der Fig. 3 ist der Schweller 1 in der Fahrzeuglängsrichtung x mehrteilig aufgebaut, und zwar mit einem vorderen Verbindungselement 17, einem mittleren Abschnitt 19 sowie einem hinteren Verbindungselement 21, an dem hinteren Eckknoten 18 anschließt. Zudem ist in den Figuren lediglich ein Innenteil des Schwellers 1 gezeigt, während ein Schweller-Außenteil weggelassen ist. In der Fig. 3 ist der vordere sowie der hintere Batteriequerträger 11, 13 in der Fahrzeugquerrichtung y nicht komplett durchgängig ausgebildet, sondern vielmehr fahrzeugmittig mit einem Versorgungs-Zugang 25 zumindest teilweise unterbrochen, durch den nicht gezeigte Versorgungsleitungen verlegbar sind.

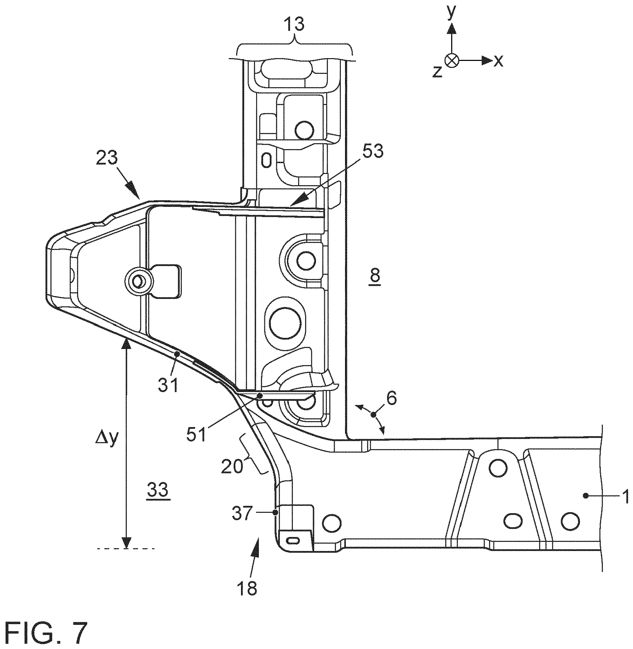

Im Hinblick auf eine Bauraum-Vergrößerung für die Traktionsbatterie 9 ist gemäß der Fig. 7 der jeweilige Schweller 1 mit Bezug auf den hinteren Karosserie-Längsträger 23 in der Fahrzeugquerrichtung y um einen Querversatz Δy nach fahrzeugaußen versetzt. Mit Hilfe des zwischengeschalteten hinteren Eckknotens 18 wird dieser Querversatz Δy nach fahrzeugvorne überbrückt. Das heißt, dass sich der hintere Eckknoten 18 nach fahrzeugvorne unter Aufbrauch des Querversatzes Δy in der Fahrzeugquerrichtung y ausweitet, wodurch eine verbindungssteife, kraftübertragende Schweller-Anbindungsstelle 20 des hinteren Karosserie-Längsträgers 23 an den Schweller 1 realisiert ist.

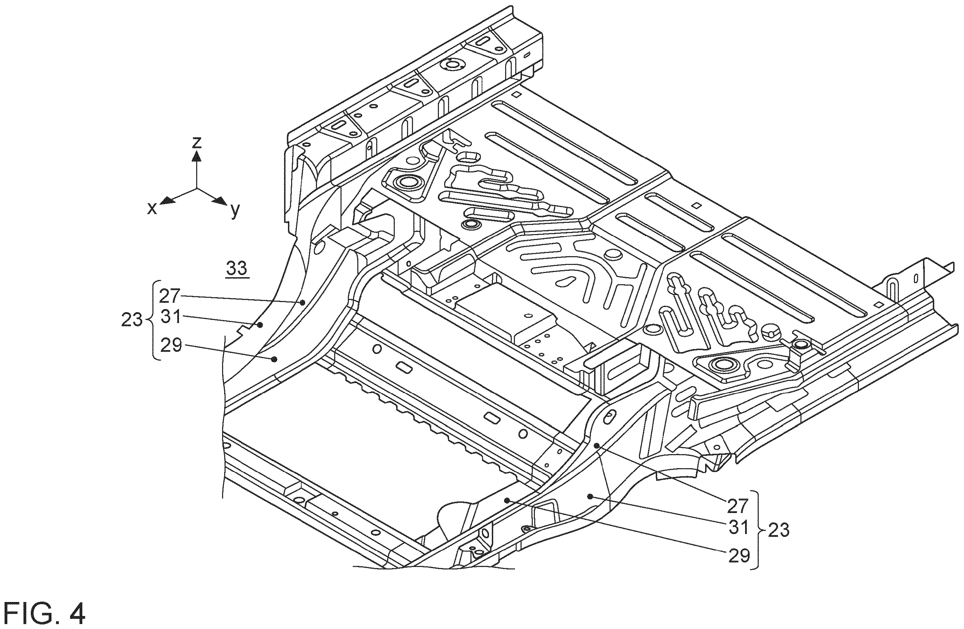

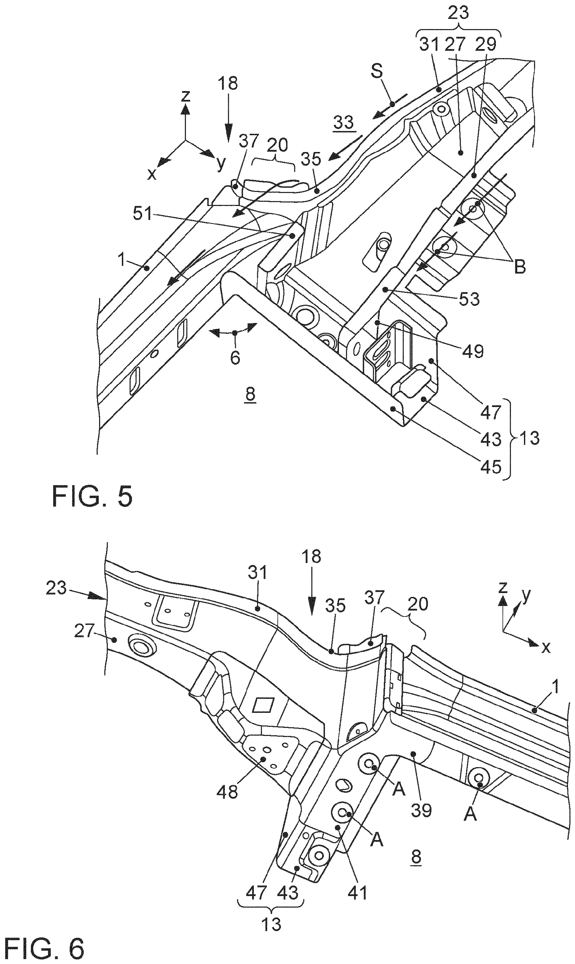

Wie aus der Fig. 4 oder 5 hervorgeht, ist der hintere Karosserie-Längsträger 23 ein im Querschnitt U-förmiges Stahlprofilteil mit einem Längsträger-Boden 27 sowie davon hochgezogener Innenflanke 29 und Außenflanke 31. Das nach oben offene U-Profil des hinteren Karosserie-Längsträgers 23 ist im Zusammenbauzustand von einem fondseitigen Bodenblechteil 10 (Fig. 3) geschlossen. Wie aus der Fig. 5 weiter hervorgeht, begrenzt die Außenflanke 31 des hinteren Karosserie-Längsträgers 23 einen Radraum 33 des heckseitigen Radhauses in der Fahrzeugquerrichtung y nach fahrzeuginnen.

Zur Ausbildung einer verbindungssteifen Schweller-Anbindungsstelle 20 ist in der Fig. 5 die Außenflanke 31 des hinteren Karosserie-Längsträgers 23 nach fahrzeugvorne an einer Übergangskante 35 mit einem Schweller-Abschlussteil 37 verlängert. Das Schweller-Abschlussteil 37 ist an der Übergangskante 35 nach fahrzeugaußen abgewinkelt. Am Schweller-Abschlussteil 37 schließt der Schweller 1 kraftübertragend ab. Zudem begrenzt das Schweller-Abschlussteil 37 den Radraum 33 des heckseitigen Radhauses nach fahrzeugvorne.

Für eine verbindungssteife Ausbildung der Schweller-Anbindungsstelle 20 ist der Längsträger-Boden 27 des hinteren Karosserie-Längsträgers 23 nach fahrzeugvorne mit einem Fügeabschnitt 39 (Fig. 6) verlängert. Dieser untergreift den Schweller 1 und ist mit der Schweller-Unterseite kraftübertragend verbunden (zum Beispiel durch Schweißverbindung).

Nachfolgend wird anhand der Fig. 5 die Anbindung des hinteren Karosserie-Längsträgers 23 am hinteren Batterie-Querträger 13 erläutert: Demzufolge ist der Längsträger-Boden 27 des hinteren Karosserie-Längsträgers 23 nach fahrzeugvorne mit einem Bodensegment 41 verlängert. Das Bodensegment 41 untergreift den hinteren Batterie-Querträger 13 und ist mit diesem unter Bildung einer Doppelwandstruktur kraftübertragend verbunden. Gemäß der Fig. 6 ragt der zur Schweller-Anbindung bereitgestellte Fügeabschnitt 39 vom Bodensegment 41, das für die Batteriequerträger-Anbindung bereitgestellt ist, in der Fahrzeuglängsrichtung x nach vorne ab.

In der Fig. 5 ist der hintere Batterie-Querträger 13 ein U-förmiges Stahlprofilteil mit einem Querträger-Boden 43 sowie davon hochgezogener Vorderflanke 45 und Hinterflanke 47. Das nach oben offene Querträger-Profil ist im Zusammenbauzustand von dem fondseitigen Bodenblechteil 10 geschlossen. Im Hinblick auf eine verbindungssteife Längsträger-Anbindung sind in der Fig. 6 das Bodensegment 41 des hinteren Karosserie-Längsträgers 23 und der Querträger-Boden 43 unter Bildung einer bauteilsteifen Doppelwandstruktur miteinander (zum Beispiel durch Schweißverbindung) verbunden.

In der Fig. 5 begrenzt die Vorderflanke 45 des Batterie-Querträgers 13 unmittelbar den Batterie-Montageraum 8. Die Vorderflanke 45 des Batterie-Querträgers 13 ist zudem in der Fahrzeugquerrichtung y bis in kraftübertragende Anlage mit dem Schweller 1 geführt, und zwar unter Bildung eines Inneneckbereiches 6, der im Zusammenbauzustand eine Batterieecke der Traktionsbatterie 9 einfasst.

Die Hinterflanke 47 des hinteren Batterie-Querträgers 13 weist in der Fig. 5 einen Montagefreischnitt 49 auf, durch den sich ein Schweller-Schottblechteil 51 und ein Batterie-Schottteil 53 erstrecken. Das Schweller-Schottblechteil 51 verlängert die Außenflanke 31 des hinteren Karosserie-Längsträgers 23 bis in kraftübertragende Anlage mit der Vorderflanke 45 des Batterie-Querträgers 13. In gleicher Weise verlängert das Batterie-Schottblechteil 53 die Innenflanke 29 des hinteren Karosserie-Längsträgers 23 durch den Montagefreischnitt 49 hindurch bis in kraftübertragende Anlage mit der Vorderflanke 45 des Batterie-Querträgers 13.

Im Heckcrashfall ergibt sich ein Schweller-Lastpfad S (Fig. 5), in dem die Außenflanke 31 sowie der Längsträger-Boden 27 des hinteren Karosserie-Längsträgers 23, das Schweller-Schottblechteil 51 sowie der Schweller 1 eingebunden sind. Parallel zum Schweller-Lastpfad S bildet sich in der Fig. 5 ein Batterie-Lastpfad B. Im Batterie-Lastpfad B ist die Innenflanke 29 sowie der Längsträger-Boden 27 des hinteren Karosserie-Längsträgers 23, das Batterie-Schottblechteil 53 und die Vorderflanke 45 des hinteren Batterie-Querträgers 13 eingebunden.

### Bezugszeichenliste

- 1: Schweller
- 3: A-Säule
- 5: C-Säule
- 6: Inneneckbereich
- 7: Seitentüröffnung
- 8: Montageraum
- 9: Traktionsbatterie
- 10: Bodenblechteil
- 11: vorderer Batteriequerträger
- 12: Gehäuseflansch
- 13: hinterer Batteriequerträger
- 15: Karosserie-Längsträger
- 16: Hohlprofil-Eckknoten
- 17: vorderes Verbindungselement
- 19: Mittelteil
- 20: Schweller-Anbindungsstelle
- 21: hinteres Verbindungselement
- 23: hinterer Karosserie-Längsträger
- 25: Versorgungs-Zugang
- 27: Längsträger-Boden
- 29: Innenflanke des Längsträgers
- 31: Außenflanke des Längsträgers
- 33: Radraum
- 35: gerundete Übergangskante
- 37: Schweller-Abschlussteil
- 39: Fügeabschnitt
- 41: Bodensegment
- 43: Querträger-Boden
- 45: Querträger-Vorderflanke
- 47: Querträger-Hinterflanke
- 49: Montagefreischnitt
- 51: Schweller-Schottblechteil
- 53: Batterie-Schottblechteil
- Δy: Querversatz
- A: Traktionsbatterie-Anbindungspunkte
- S: Schweller-Lastpfad
- B: Batterie-Lastpfad

## Patentansprüche

1. Karosseriestruktur für ein elektrisch betriebenes Fahrzeug, mit einem in der Fahrzeughochrichtung (z) nach fahrzeugunten offenen Montageraum (8) für eine Traktionsbatterie (9), der nach fahrzeugoben von einem, den Fahrzeugboden bildenden Bodenblechteil (10) abgeschlossen ist, und in der Fahrzeugquerrichtung (y) beidseitig durch einen Schweller (1) begrenzt ist, der eine Seitentüröffnung (7) nach fahrzeugunten begrenzt, wobei an jeder Fahrzeugseite im Hinterwagenbereich ein hinterer Karosserie-Längsträger (23) verläuft, der in der Fahrzeuglängsrichtung (x) nach fahrzeugvorne in den jeweiligen Schweller (1) übergeht, und wobei die jeweils hintere Batterieecke der Traktionsbatterie (9) von einem Inneneckbereich (6) eingefasst ist, der zwischen dem Schweller (1) und dem hinteren Batteriequerträger (13) aufgespannt ist, wobei an jeder Fahrzeugseite der Schweller (1) mit Bezug auf den hinteren Karosserie-Längsträger (23) in der Fahrzeugquerrichtung (y) um einen Querversatz (Δy) nach fahrzeugaußen versetzt ist, und wobei an den hinteren Karosserie-Längsträger (23) in der Fahrzeuglängsrichtung (x) nach fahrzeugvorne ein hinterer Eckknoten (18) anschließt, der sich in der Fahrzeuglängsrichtung (x) nach fahrzeugvorne unter Aufbrauch des Querversatzes (Δy) ausweitet und der an einer Schweller-Anbindungsstelle (20) kraftübertragend am Schweller (1) angebunden ist, **dadurch gekennzeichnet, dass** der hintere Karosserie-Längsträger (23) ein im Querschnitt U-förmiges Profilteil mit einem Längsträger-Boden (27) sowie davon hochgezogenen Innen- und Außenflanken (29, 31) ist, dass das nach oben offene U-Profil des Karosserie-Längsträgers (23) im Zusammenbauzustand von einem fondseitigen Bodenblechteil (10) geschlossen ist, und dass die Außenflanke (31) des hinteren Längsträgers (23) einen Radraum (33) des heckseitigen Radhauses nach fahrzeuginnen begrenzt.

2. Karosseriestruktur nach Anspruch 1, **dadurch gekennzeichnet, dass** zur Ausbildung der Schweller-Anbindungsstelle (20) die Außenflanke (31) des hinteren Längsträgers (23) nach fahrzeugvorne an einer Übergangskante (35) mit einem Schweller-Abschlussteil (37) verlängert ist, und dass am Schweller-Abschlussteil (37) der Schweller (1) abschließt und/oder das Schweller-Abschlussteil (37) den Radraum (33) des heckseitigen Radhauses nach fahrzeugvorne begrenzt.

3. Karosseriestruktur nach Anspruch 1 oder 2, **dadurch gekennzeichnet, dass** zur Ausbildung der Schweller-Anbindungsstelle (20) der Längsträger-Boden (27) nach fahrzeugvorne mit einem Fügeabschnitt (39) verlängert ist, der den Schweller (1) untergreift und mit diesem kraftübertragend verbunden ist.

4. Karosseriestruktur nach Anspruch 1, 2 oder 3, **dadurch gekennzeichnet, dass** zur Anbindung des hinteren Karosserie-Längsträgers (23) am hinteren Batterie-Querträger (13) der Längsträger-Boden (27) nach fahrzeugvorne mit einem Bodensegment (41) verlängert ist, das den hinteren Batterie-Querträger (13) untergreift und mit diesem kraftübertragend verbunden ist.

5. Karosseriestruktur nach einem der vorhergehenden Ansprüche, **dadurch gekennzeichnet, dass** der hintere Batterie-Querträger (13) ein U-förmiges Profilteil mit einem Querträger-Boden (43) sowie davon hochgezogenen Vorder- und Hinterflanken (45, 47) ist, und dass das nach oben offene Profilteil im Zusammenbauzustand von einem fondseitigen Bodenblechteil (10) geschlossen ist, und dass die Vorderflanke (45) des Batterie-Querträgers (13) den Batterie-Montageraum (8) begrenzt und/oder in der Fahrzeugquerrichtung (y) in kraftübertragender Anlage mit dem Schweller (1) ist, und zwar unter Bildung des Inneneckbereiches (6).

6. Karosseriestruktur nach Anspruch 5, **dadurch gekennzeichnet, dass** die Hinterflanke (47) des hinteren Batterie-Querträgers (13) einen Montagefreischnitt (49) aufweist, und dass die Außenflanke (31) des hinteren Längsträgers (23) mit einem Schweller-Schottblechteil (51) verlängert ist, das durch den Montagefreischnitt (49) der Hinterflanke (47) des Batterie-Querträgers (13) bis in kraftübertragende Anlage mit der Vorderflanke (45) des Batterie-Querträgers (13) geführt ist.

7. Karosseriestruktur nach Anspruch 6, **dadurch gekennzeichnet, dass** in einem Heckcrashfall ein Schweller-Lastpfad (S) gebildet ist, in dem die Außenflanke (31) sowie der Längsträger-Boden (27) des hinteren Karosserie-Längsträgers (23), das Schweller-Schottblechteil (51) und der Schweller (1) eingebunden sind.

8. Karosseriestruktur nach Anspruch 6 oder 7, **dadurch gekennzeichnet, dass** die Innenflanke (29) des hinteren Längsträgers (23) mit einem Batterie-Schottblechteil (53) verlängert ist, das durch den Montagefreischnitt (49) der Hinterflanke (47) des Batterie-Querträgers (13) bis in kraftübertragende Anlage mit der Vorderflanke (45) des Batterie-Querträgers (13) geführt ist, und dass im Heckcrashfall ein Batterie-Lastpfad (B) gebildet ist, in dem die Innenflanke (29) sowie der Längsträger-Boden (27) des hinteren Karosserie-Längsträgers (23), das Batterie-Schottblechteil (53) und die Vorderflanke (45) des Batterie-Querträgers (13) eingebunden sind.

9. Karosseriestruktur nach den Ansprüchen 4 und 5, **dadurch gekennzeichnet, dass** das Bodensegment (41) des hinteren Karosserie-Längsträgers (23) und der Querträger-Boden (43) des hinteren Batterie-Querträgers (13) unter Bildung einer bauteilsteifen Doppelwandstruktur miteinander verbunden sind.

## Claims

1. Body structure for an electrically operated vehicle, having a installation space (8) for a traction battery (9), said installation space being open towards the bottom of the vehicle in the vehicle vertical direction (z) and being terminated towards the top of the vehicle by a floor pan part (10) forming the vehicle floor, and being delimited on both sides in the vehicle transverse direction (y) by a sill (1), which delimits a side door opening (7) towards the bottom of the vehicle, wherein a rear longitudinal body member (23) extends on each side of the vehicle in the rear-end region and merges towards the front of the vehicle in the vehicle longitudinal direction (x) into the respective sill (1), and wherein the rear battery corner of the traction battery (9) is enclosed by an inner corner region (6), which stretches between the sill (1) and the rear battery cross-member (13), wherein on each side of the vehicle the sill (1) is offset relative to the rear longitudinal body member (23) towards the exterior of the vehicle by a transverse offset (Δy) in the vehicle transverse direction (y), and wherein the rear longitudinal body member (23) is adjoined towards the front of the vehicle in the vehicle longitudinal direction (x) by a rear corner joint (18), which widens towards the front of the vehicle in the vehicle longitudinal direction (x), taking up the transverse offset (Δy), and is attached in a force-transmitting manner at a sill attachment point (20) to the sill (1), **characterized in that** the rear longitudinal body member (23) is a profile part of U-shaped cross section having a longitudinal member base (27) and also inner and outer flanks (29, 31) raised up therefrom, **in that** the U-shaped profile, which is open at the top, of the longitudinal body member (23) is closed in the assembled state by a floor pan part (10) at the back, and **in that** the outer flank (31) of the rear longitudinal member (23) delimits towards the interior of the vehicle a wheel space (33) of the wheel housing at the rear.

2. Body structure according to Claim 1, **characterized in that**, in order to form the sill attachment point (20), the outer flank (31) of the rear longitudinal member (23) is lengthened towards the front of the vehicle at a transition edge (35) by a sill end piece (37), and **in that** the sill (1) ends at the sill end piece (37) and/or the sill end piece (37) delimits towards the front of the vehicle the wheel space (33) of the wheel housing at the rear.

3. Body structure according to Claim 1 or 2, **characterized in that**, in order to form the sill attachment point (20), the longitudinal member base (27) is lengthened towards the front of the vehicle by a joining portion (39), which engages beneath the sill (1) and is connected in a force-transmitting manner thereto.

4. Body structure according to Claim 1, 2 or 3, **characterized in that**, in order to attach the rear longitudinal body member (23) to the rear battery cross-member (13), the longitudinal member base (27) is lengthened towards the front of the vehicle by a base segment (41), which engages beneath the rear battery cross-member (13) is connected in a force-transmitting manner thereto.

5. Body structure according to one of the preceding claims, **characterized in that** the rear battery cross-member (13) is a U-shaped profile part having a cross-member base (43) and also front and rear flanks (45, 47) raised up therefrom, and **in that** the profile part, which is open at the top, is closed in the assembled state by a floor pan part (10) at the back, and **in that** the front flank (45) of the battery cross-member (13) delimits the battery installation space (8) and/or is in force-transmitting contact with the sill (1) in the vehicle transverse direction (y), namely to form the inner corner region (6).

6. Body structure according to Claim 5, **characterized in that** the rear flank (47) of the rear battery cross-member (13) has a mounting clearance (49), and **in that** the outer flank (31) of the rear longitudinal member (23) is lengthened by a sill bulkhead plate part (51), which is guided through the mounting clearance (49) in the rear flank (47) of the battery cross-member (13) until it is in force-transmitting contact with the front flank (45) of the battery cross-member (13).

7. Body structure according to Claim 6, **characterized in that**, in the event of a rear-end collision, a sill load path (S) which involves the outer flank (31) and also the longitudinal member base (27) of the rear longitudinal body member (23), the sill bulkhead plate part (51) and the sill (1) is formed.

8. Body structure according to Claim 6 or 7, **characterized in that** the inner flank (29) of the rear longitudinal member (23) is lengthened by a battery bulkhead plate part (53), which is guided through the mounting clearance (49) in the rear flank (47) of the battery cross-member (13) until it is in force-transmitting contact with the front flank (45) of the battery cross-member (13), and **in that**, in the event of a rear-end collision, a battery load path (B) which involves the inner flank (29) and also the longitudinal member base (27) of the rear longitudinal body member (23), the battery bulkhead plate part (53) and the front flank (45) of the battery cross-member (13) is formed.

9. Body structure according to Claims 4 and 5, **characterized in that** the base segment (41) of the rear longitudinal body member (23) and the cross-member base (43) of the rear battery cross-member (13) are connected to one another to form a structurally rigid double-walled structure.

## Revendications

1. Structure de carrosserie pour un véhicule à propulsion électrique, comprenant un espace de montage (8) pour une batterie de traction (9), ouvert vers l'extérieur du véhicule dans la direction (z) de la hauteur du véhicule, qui est fermé vers le haut du véhicule par une partie en tôle de plancher (10) formant le plancher du véhicule, et qui est délimité des deux côtés dans la direction transversale (y) du véhicule par un bas de caisse (1) qui délimite une ouverture de portière latérale (7) vers l'extérieur du véhicule, un longeron arrière (23) de carrosserie s'étendant de chaque côté du véhicule dans la zone de l'arrière du véhicule et se prolongeant vers l'avant du véhicule dans la direction longitudinale (x) du véhicule par le bas de caisse (1) correspondant, et le coin arrière respectif de la batterie de traction (9) étant entouré d'une zone de coin intérieur (6) qui s'étend entre le bas de caisse (1) et le support transversal arrière (13) de la batterie, le bas de caisse (1) étant, de chaque côté du véhicule, orienté vers l'avant par rapport au longeron arrière (23) de la carrosserie, dans la direction transversale (y) du véhicule, d'un décalage transversal (Δy) vers l'extérieur du véhicule, et un noeud d'angle arrière (18) se raccordant au longeron arrière (23) de carrosserie dans la direction longitudinale (x) du véhicule vers l'avant du véhicule, qui s'élargit dans la direction longitudinale (x) du véhicule vers l'avant du véhicule en utilisant le décalage transversal (Δy) et qui est relié au bas de caisse (1) en transmettant les forces au niveau d'un point de liaison (20) du bas de caisse, **caractérisé en ce que** le longeron arrière (23) de carrosserie est une pièce profilée à section en forme de U avec un fond (27) de longeron ainsi que des flancs intérieur et extérieur (29, 31) relevés à partir de celui-ci, **en ce que** le profilé en U ouvert vers le haut du longeron (23) de carrosserie est, à l'état assemblé, fermé par une pièce de tôle de plancher (10) côté arrière, et **en ce que** le flanc extérieur (31) du longeron arrière (23) délimite un espace de roue (33) du passage de roue arrière vers l'intérieur du véhicule.

2. Structure de carrosserie selon la revendication 1, **caractérisée en ce que**, pour former le point de liaison (20) du bas de caisse, le flanc extérieur (31) du longeron arrière (23) est prolongé vers l'avant du véhicule, au niveau d'une arête de transition (35), par une partie de fermeture (37) du bas de caisse, et **en ce que** le bas de caisse (1) se termine au niveau de la partie de fermeture (37) de bas de caisse et/ou la partie de fermeture (37) de bas de caisse délimite l'espace de roue (33) du passage de roue arrière vers l'avant du véhicule.

3. Structure de carrosserie selon la revendication 1 ou la revendication 2, **caractérisée en ce que**, pour former le point de liaison (20) du bas de caisse, le fond (27) du longeron est prolongé vers l'avant du véhicule par une section d'assemblage (39) qui s'engage sous le bas de caisse (1) et qui est reliée à celui-ci par transmission de force.

4. Structure de carrosserie selon la revendication 1, 2 ou 3, **caractérisée en ce que**, pour relier le longeron arrière (23) de la carrosserie au support transversal arrière (13) de la batterie, le fond du longeron (27) est prolongé vers l'avant du véhicule par un segment de fond (41) qui s'engage sous le support transversal arrière (13) de la batterie et est relié à celui-ci par transmission de force.

5. Structure de carrosserie selon l'une des revendications précédentes, **caractérisée en ce que** le support transversal arrière (13) de la batterie est une pièce profilée en forme de U avec un fond (43) de support transversal ainsi que des flancs avant et arrière (45, 47) relevés à partir de celui-ci, et **en ce que** la partie profilée ouverte vers le haut est fermée à l'état assemblé par une partie de tôle de plancher (10) côté arrière, et **en ce que** le flanc avant (45) du support transversal (13) de la batterie délimite l'espace de montage de batterie (8) et/ou est en appui de transmission de force avec le bas de caisse (1) dans la direction transversale (y) du véhicule, et ce, en formant la zone d'angle intérieur (6).

6. Structure de carrosserie selon la revendication 5, **caractérisée en ce que** le flanc arrière (47) du support transversal arrière (13) de la batterie présente une découpe de montage (49), et **en ce que** le flanc extérieur (31) du longeron arrière (23) est prolongé par une pièce de tôle de cloison (51) de bas de caisse qui est guidée à travers la découpe de montage (49) du flanc arrière (47) du support transversal (13) de la batterie jusqu'en appui de transmission de force avec le flanc avant (45) du support transversal (13) de la batterie.

7. Structure de carrosserie selon la revendication 6, **caractérisée en ce que**, en cas de collision arrière, un chemin de charge (S) de bas de caisse est formé, dans lequel sont intégrés le flanc extérieur (31) ainsi que le fond (27) de longeron du longeron arrière (23) de carrosserie, la pièce de tôle de cloison (51) de bas de caisse et le bas de caisse (1).

8. Structure de carrosserie selon la revendication 6 ou la revendication 7, **caractérisée en ce que** le flanc intérieur (29) du longeron arrière (23) est prolongé par une pièce de tôle de cloison (53) de batterie qui traverse la découpe de montage (49) du flanc arrière (47) du support transversal (13) de la batterie jusqu'à venir en contact de transmission de force avec le flanc avant (45) du support transversal (13) de la batterie, et **en ce que**, en cas de collision arrière, il est formé un chemin de charge de batterie (B) dans lequel sont intégrés le flanc intérieur (29) ainsi que le fond (27) de longeron du longeron arrière (23) de la carrosserie, la partie de tôle de cloison (53) de batterie et le flanc avant (45) du support transversal (13) de la batterie.

9. Structure de carrosserie selon les revendications 4 et 5, **caractérisée en ce que** le fond (41) du longeron arrière (23) de la carrosserie et le fond du support transversal (43) du support transversal arrière (13) de batterie sont reliés entre eux en formant une structure à double paroi rigide.
